# EUROPEAN PATENT APPLICATION

(11) **EP 4 516 492 A1**
(43) Date of publication of application: **05.03.2025**
(21) Application number: 23194247.5
(22) Date of filing: 30.08.2023
(51) Int. Cl.: B29C 70/54, B65G 47/91, B25J 15/06, B29C 31/08, B29D 99/00, B66C 1/02, F03D 1/06

(54) **LIFTING YOKE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Lifting yoke, adapted for transporting convex or concave preform elements (12) comprising a layer stack of fiber mats fixated by means of a binding agent and adapted for the production of a wind turbine rotor blade, comprising a number of gripper elements (6) adapted to grip the preform element (12) and arranged in a convex or concave geometry at a suspension device (5) of the yoke (1), and a supporting device (2) connected to the suspension device (5) , which supporting device (2) comprises a connection device (3) adapted to connect the yoke (1) to a lifting means (4) and a rotation device adapted to rotate a part (14) of the supporting device (2) carrying the suspension device (5) relative to the connection device (3) around a horizontal axis (A).

## Description

The invention refers to a lifting yoke, adapted for transporting convex or concave preform elements comprising a layer stack of fiber mats fixated by means of a binding agent and adapted for the production of a wind turbine rotor blade.

A preform element is made of a preform building material comprising separate fiber mats of preferably glass fiber, which mats are arranged in a preform mold as a stack. The stack is provided with a binding agent, preferably in powder form, made of a thermoset or thermoplastic binder. The building material is heated in the mold, thereby activating the binding agent, which adheres to the fiber mats and, when cooled again, fixates the stack. As a result, a preform element made of a stack of reinforcing fiber mats is obtained in a desired shape, which is defined by the mold. Such preform elements are advantageous when building a wind turbine rotor blade, as they significantly decrease the lay-up time of the blade material in the blade mold.

When such preform elements are to be handled, e.g. from the preform mold to a rack for storing them, or from the rack to a blade mold for positioning them in the mole, a handling tool is needed. Usually a lifting yoke is used, which can lift the fragile preform elements so that they do not delaminate during the handling process and which can lift and transport them to the blade mold, which mold comprises convex and concave areas, to which the preform elements are to be precisely attached in an angled position. The mold comprises a lower outer mold part having a concave molding area, and a mandrel arranged in the outer mold part and having a circular cross section, thereby providing a convex molding area. The yoke therefore must be able to handle the preform elements accordingly, so that they can be arranged in the concave molding area as well as in the convex molding area.

It is an object of the invention to provide a lifting yoke which supports and simplifies the transport and arrangement of such bend preform elements.

For addressing the object, the invention proposes a lifting yoke, adapted for transporting convex or concave preform elements comprising a layer stack of fiber mats fixated by means of a binding agent and adapted for the production of a wind turbine rotor blade, comprising a number of gripper elements adapted to grip the preform element and arranged in a convex or concave geometry at a suspension device of the yoke, and a supporting device connected to the suspension device, which supporting device comprises a connection device adapted to connect the yoke to a lifting means and a rotation device adapted to rotate a part of the supporting device carrying the suspension device relative to the connection device around a horizontal axis.

The inventive lifting yoke is adapted for the transport of such large preform elements, which may have a length of several meters, e.g. 10 to 16 m, and a width also of several meters, e.g. 2 to 4 m. therefore, also the lifting yoke respectively the arrangement of the gripper elements adapted to grip the preform element is adapted to the size and geometry of the preform elements to be transported, in order to provide a secure gripping of the preform element. The gripper elements are arranged in a convex or concave geometry at a suspension device, depending on the orientation, in which the preform element needs to be gripped. The suspension device, preferably, is frame-like, wherein the size of this frame-like suspension device also corresponds to the size of the preform element, thereby allowing for the respective distribution of the gripper elements. The suspension device, which is the carrier means for the arrangement of the gripper elements, is connected to a supporting device, which supporting device comprises a connection device. The connection device is adapted to connect the yoke to a lifting means like a lifting rope arrangement of a crane.

The supporting device furthermore comprises a rotation device adapted to rotate the part of supporting device to which the suspension device is attached, and thereby certainly also the suspension device and the gripper element arrangement relative to the connection device around a horizontal axis. This rotation device therefore allows for a rotation of the gripper element arrangement around a horizontal axis, from a neutral position, in which the gripper elements respectively the frame-like suspension device are in a horizontal position, to both sides in a respective pivoted position. As for the transport a preform element is attached to the gripper elements respectively the gripper element arrangement, certainly also the preform element can be rotated respectively swiveled around the horizontal axis, from a neutral position in an angled position to both sides. The angle of rotation may for example be, starting from the neutral position, at least+/- 45°, preferably +/- 60° and most preferably +/-75 °, up to a maximum of +/- 90°. By means of this active rotation respectively this active positioning of the preform element, the orientation of the preform element can precisely be adapted to the orientation, in which it needs to be arranged in the blade mold for the final production of the turbine blade. Depending on the position, where the respective preform element shall be arranged in the blade mold, either a convex gripper element arrangement is used, which allows for gripping the preform element at the concave inner side, so that the convex outer side of the preform element can be placed on to the concave mold surface of the lower mold part. Or a concave gripper element arrangement is used, which allows for gripping the preform element at the convex outer side, so that the concave inner side of the preform element can be placed on the convex surface of the mandrel. In any case, the ability to actively rotate and therefore precisely adapt the spatial orientation of the preform element relative to the blade mold, the transport and the arrangement of the preform elements is simplified and, as the rotation is preferably automatic and performed by means of respective controlled motors, faster and comfortable for the working personnel.

Preferably, the suspension device is releasably connected to the supporting device. This allows for coupling the needed gripper arrangement respectively suspension device with either a convex or a concave gripper element arrangement. The system therefore may comprise two different suspension devices, one of which comprises a convex gripper element arrangement, and the other comprises a concave gripper element arrangement. Depending on the position, where the preform element shall be arranged in the blade mold, the respective suspension device with either the convex or the concave gripper element arrangement is simply connected to the common supporting device.

The suspension device may comprise a, preferably a rectangular, suspension frame, to which several carrier rails are attached, at each of which several gripper elements are arranged. As already mentioned, the suspension device is preferably frame-like. This geometry may be realized by means of a suspension frame. For arranging the several separate gripper elements, preferably carrier rails are used, which are either convex or concave, so that they define the respective convex or concave geometry of the gripper element arrangement. The separate carrier rails are arranged at the suspension frame, they are preferably evenly distributed over the length of the suspension frame parallel to each other, wherein each carrier rails extends perpendicular to the length of the suspension frame. The gripper elements are adjustable in their height, so that by changing the heights the radius defined by the convex or concave gripper arrangement can be varied. Instead of such rails, each gripper element can also be fixated by means of a rod, which ma be variable in its length.

Preferably the gripper elements are movable along the carrier rails and lockable in a desired position. This allows for simply adjusting the position of the gripper elements along the carrier rails. By this the gripper elements can be arranged either closer or wider to each other, thereby adjusting the width of the arrangement to the width of the preform elements to be gripped.

Like the suspension device, also the supporting device is preferably frame-like. The supporting device may therefore comprise a, preferably rectangular, supporting frame, at which the connection device is arranged. As mentioned, the suspension device respectively suspension frame is coupled to the supporting device. For providing a mechanically stable coupling, it is advantageous to provide a respective supporting frame, just like the suspension frame, which is in its size adapted to the suspension frame for allowing a good mechanical connection.

As already mentioned, it is preferred, when the suspension device is releasably connectable to the supporting device. For realizing this changeable connection, the supporting device may comprise connecting elements for releasably connecting to the suspension device. Arranging the connecting elements at the common supporting device is advantageous, as they need to be provided only once. Preferably, the connecting elements are clamps which are movable between a releasing position and a clamping position. For connecting the supporting device to the suspension device, it is only necessary to arrange the supporting device at the suspension device, whereafter only the clamps need to be moved from the releasing position in the clamping position. Preferably, these claims are movable automatically, which automatic movement can be realized by means of a motor driving the clamps, which clamps may also be connected, so that one or only a smaller number of motors can be used for driving all clamps. Certainly, each clamp may comprise a separate motor. In an alternative, the clamps may also be moved manually.

As mentioned, a central feature of the invention is the rotation device adapted to rotate the supporting device (and with it also the gripper element arrangement) relative to the connection device around a horizontal axis. For realizing the rotation device respectively this rotation ability, according to a first embodiment the supporting device may comprise a shaft coupled to the connection device, which shaft is rotatable by means of a motor arranged preferably at the connecting means and is coupled to the rotatable part of the supporting device by tilting means. The shaft, which extends horizontally, is actively rotated by the motor arranged preferably at the connecting means. This shaft only provides the drive means, necessary for rotating or tilting the part of the supporting device, which is rotatable for rotating the gripper element arrangement. The shaft therefore does not provide the horizontal axis, which horizontal axis is arranged distanced to this shaft closer to or at the part of the supporting device which is rotatable. The shaft is connected to this part of the supporting device by respective tilting means, examples of which will be described later. The motor, which is controlled by a respective control, preferably drives a gearbox comprising a toothed wheel which meshes with a toothed gear arranged at the shaft.

According to a first embodiment using such a drive shaft, the shaft is preferably connected via an arm arrangement to the part of the supporting device in a bearing arrangement providing the horizontal axis, which arm arrangement comprises two arms arranged at least partially literally offset to the shaft and connected to the part of the supporting device, which arms are variable in their length and provide the tilting means. The shaft is connected by two arms with the rotatable part of the supporting device. These two arms, which are arranged at the end of the shaft, comprise respective bearings, in which that shaft may rotate. Further, these two arms are connected to the part of the supporting device in a respective bearing arrangement, which bearing arrangement provides the horizontal axis, around which the part of the supporting device can be tilted. As mentioned, this tilting is realized by respective tilting means. In this embodiment, the tilting means comprise respective further arms as part of the arm arrangement, which arms are variable in their length. Firmly attached to the shaft are for example two arms extending horizontally to both sides of the shaft. At each end of such an arm, a tilting means, which extends vertically, is attached, wherein the other end of this arm is attached to the part of the supporting device. So, when the shaft rotates, the fixed arms, extending horizontally, are tilted due to the rotation of the shaft, thereby extending the one vertical arm connected to the part of the supporting device and shortening the other arm. By changing the length of the vertical arms, the part of the supporting device rotates around the horizontal axis. The direction of rotation depends on the direction of rotation of the shaft.

According to an alternative embodiment, the shaft is connected via at arm arrangement to the part of the supporting device in a bearing arrangement providing the horizontal axis, wherein the shaft is rotatably connected to the arm arrangement and is coupled either via one or more timing belts, providing the tilting means, to the part of the supporting device, which one or more timing belts mesh with a toothed section of the shaft and are fixated with both ends at the frame part, or is coupled via one or more traction cables, providing the tilting means, to the part of the supporting device, which one or more traction cables are wound around the shaft and are fixated with both ends at the part of the supporting device. In this embodiment, again, an arm arrangement is provided. This arm arrangement comprises only two arms arranged at the end of the shaft, which is rotatably connected to these two arms in respective bearings. The other end of these arms is again connected to the rotatable part of the supporting device in a respective bearing arrangement providing the horizontal axis, around which the supporting device part and with it the gripper arrangement rotates. The tilting means may, according to the first alternative, comprise at least one timing belt, which belt comprises a toothed section, meshing with a toothed section of the shaft. Both ends of the timing belt are connected to the part of the supporting device. When the shaft rotates, one side of the timing belt is shortened, while the other side is lengthened, thereby tilting the supporting device part. In the other alternative, the tilting means may comprise one or more traction cables, the ends of which are coupled to the part of the supporting device. The or each traction cable is wound around the shaft. So, when the shaft rotates, the or each traction cable is shortened at one side and lengthened at the other side, thereby tilting the supporting device part.

A further embodiment does not use a common shaft being driven by a motor, but a beam coupled to the connecting device, which been comprises at least one motor coupled to a rim circulating around 90° - 180° and attached to the part of the supporting device, which rim is movable relative to the beam when driven by the motor. In this embodiment, the axis of rotation is provided by the arcuated rim, which, when driven by the motor, is moved respectively rotates relative to the beam, thereby also rotating the part of the supporting device and the gripper element arrangement. Preferably at both ends of the beam a respective motor and rim is arranged, which motors are synchronized. The or each motor preferably drives a gearbox having a toothed wheel, which meshes with the toothed rim. Alternatively, also a friction roller pressing against a friction surface of the rim may be used. Also this embodiment allows for a precise tilting movement of the supporting device part and with it the gripper element arrangement and the preform element attached to it.

A still further embodiment of the lifting yolk comprises a supporting device that comprises a frame yoke, which is arranged at a, preferably rectangular, frame part of the supporting device by a pivot connection providing an axis of rotation, wherein at least one motor is provided for pivoting the frame yoke relative to the frame part. In this embodiment, the frame yoke is directly tilted relative to the part of the supporting device without using any separate tilting means. The at least one motor tilting the frame yoke relative to the part of the supporting device is arranged directly at the supporting device part and connected to the frame yoke. The motor may be connected by any appropriate mechanical means adapted to provide the rotation respectively tilting in both directions, for example comprising a toothed wheel connection or hydraulic cylinders etc.

Preferably at least one movable balance weight is arranged at the supporting device. This balance weight allows for balancing the arrangement in the event that an uneven weight distribution is given.

Preferably the supporting device is movable along a longitudinal axis through the connecting device. This longitudinal movability further allows for a certain balancing effect in case of an uneven weight distribution in the longitudinal direction. An appropriate motor may be provided for this longitudinal movement.

The gripper elements, which directly connect to the preform element, may be needle grippers, vacuum grippers, Bernoulli grippers or vortex grippers, wherein preferably at least a part of the gripper elements comprises a heating means. Various types of gripper elements may be used, as long as they provide a sufficient stable attachment of the preform element. It is possible to integrate a heating means in at least a part of the grippers, so that in the area, where an edge of a preform element overlaps with an edge of an adjacent preform element, the binding agent may be reactivated by heating it and thereby melting it, so that the melted binding agent wets the neighboring preform element and provides a firm binder connection after curing the binder again. Both pre-from elements are thereby fixated to each other avoiding a sliding of the preform elements once being placed in the blade mold.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a principal illustration of an inventive lifting yoke,
- fig. 2: a partial illustration of a carrier rail with a movable gripper element,
- fig. 3: a first embodiment of an inventive lifting yoke comprising a rotatable frame yoke in the neutral position,
- fig. 4: the embodiment of fig. 3 in a rotated position,
- fig. 5-7: three different positions of the lifting yoke of fig. 3 in a side view,
- fig. 8: a second embodiment of an inventive lifting yoke comprising an arm arrangement and a tilting means comprising variable arms,
- fig. 9: a third embodiment of an inventive lifting yoke comprising an arm arrangement and a tilting means comprising timing belts,
- fig. 10: a fourth embodiment of an inventive lifting yoke comprising an arm arrangement and a tilting means comprising traction cables,
- fig. 11: a fifth embodiment of an inventive lifting yoke comprising arcuated rims, and
- fig. 12: an enlarged view of the rim part.

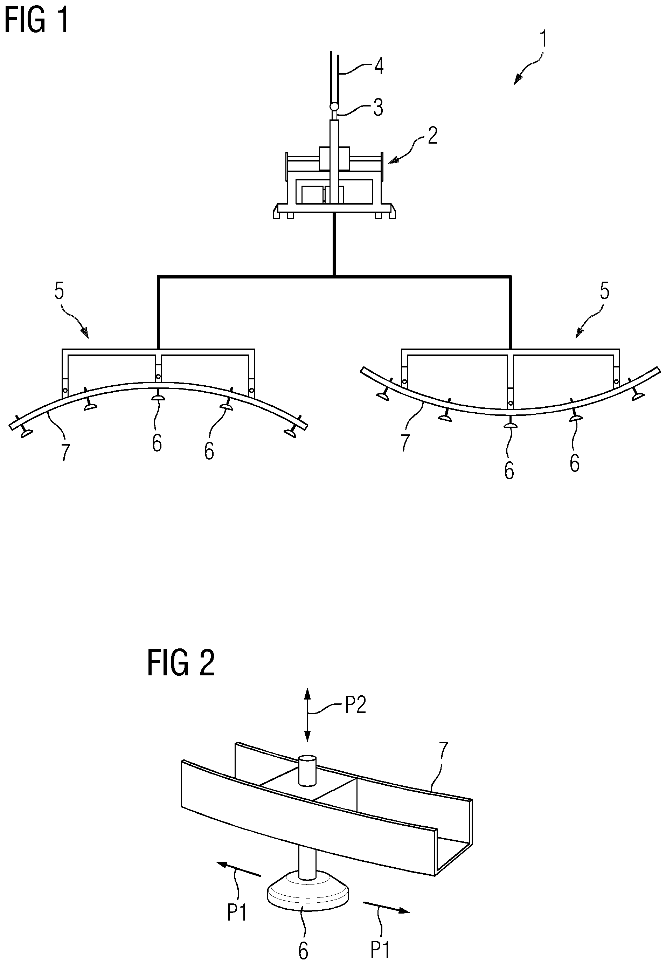

Fig. 1 shows a principal illustration of an inventive lifting yoke 1, adapted for transporting convex or concave preform elements for the production of a wind turbine rotor blade. The lifting yolk comprises a supporting device 2 comprising a connection device 3 connecting the lifting yoke 1 to a lifting means 4 like lifting ropes of a crane. To the supporting device 2 two separate suspension devices 5 can be releasably attached. Each suspension device 5 comprises a number of gripper elements 6 arranged either in a convex geometry (right side in fig. 1), or in a concave geometry (left side fig. 1). The lifting yoke 1 also extends certainly in a longitudinal direction, so that the yoke 1 respectively the supporting device 2 and the suspension device 3 as well as the arrangement of the gripper elements 6 extends over a certain length and width. Especially the distribution of the gripper elements 6 spans over a certain area, so that the respectively large convex or concave preform elements can be gripped at several gripping points distributed over the surface of the preform element.

As will be explained later with various embodiments, the arrangement of the gripper elements 6 may be pivoted or tilted in order to change the orientation of the connected preform element in order to ease the positioning of the preform element in the blade mold.

The suspension device 5 comprises a number of carrier rails 7, to which the gripper elements 6 are attached. These carrier rails are bent to define either a convex or a concave geometry. The gripper elements 6 are preferably movable along the length of the respective carrier rail 7 for adjusting the distance of the group or elements of along the carrier rail 7, as shown by the arrows P1 in figure 2. They may also be adjustable in their vertical extension relative to the carrier rail 7 in order to adjust the radius of the convex or concave bending, as shown by the arrow P2.

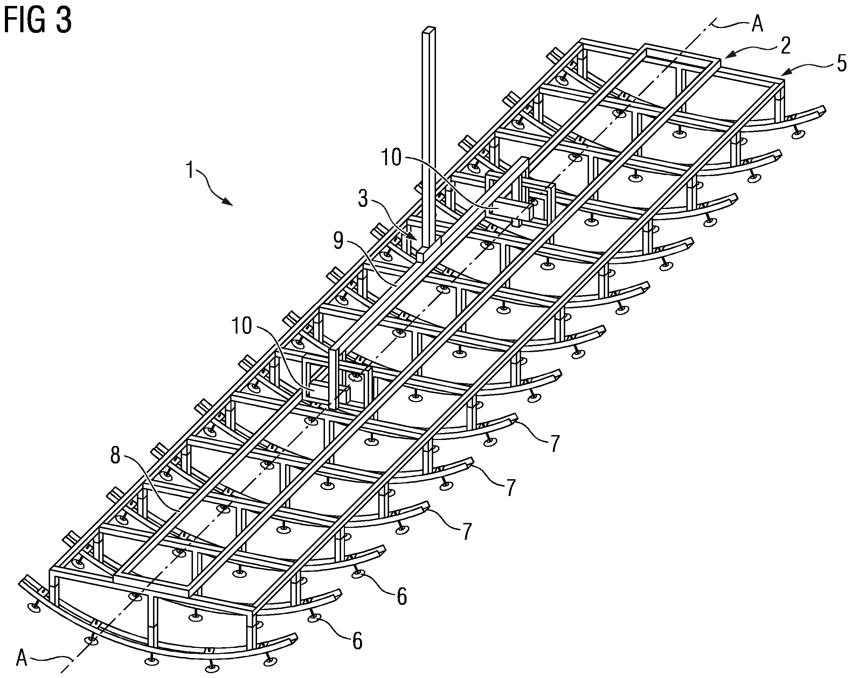

Fig. 3 shows a first embodiment of an inventive lifting yoke 1, mainly corresponding to the principal drawings of fig. 1. It shows the supporting device 2 with its connection device 3 as well as the suspension device 5 comprising a suspension frame 30 and the number of carrier rails 7 with the gripper elements 6 attached to the suspension frame 30. The supporting device 2 comprises a frame part 8 having a rectangular form. To this frame part 8 a frame yoke 9 is attached in respective bearings, so that the frame yoke 9 can rotate or swivel relative to the frame part 8 around a horizontal axis A, as shown in fig. 3. This rotation is possible in both directions starting from the neutral position shown in fig. 3. The rotation is realized by means of, in this embodiment, two motors 10 arranged at the supporting device 2 and coupled to the frame yoke 9, so that the frame part 8 and with it the suspension device 5 with the preform gripper arrangement can also be swivel around the axis A.

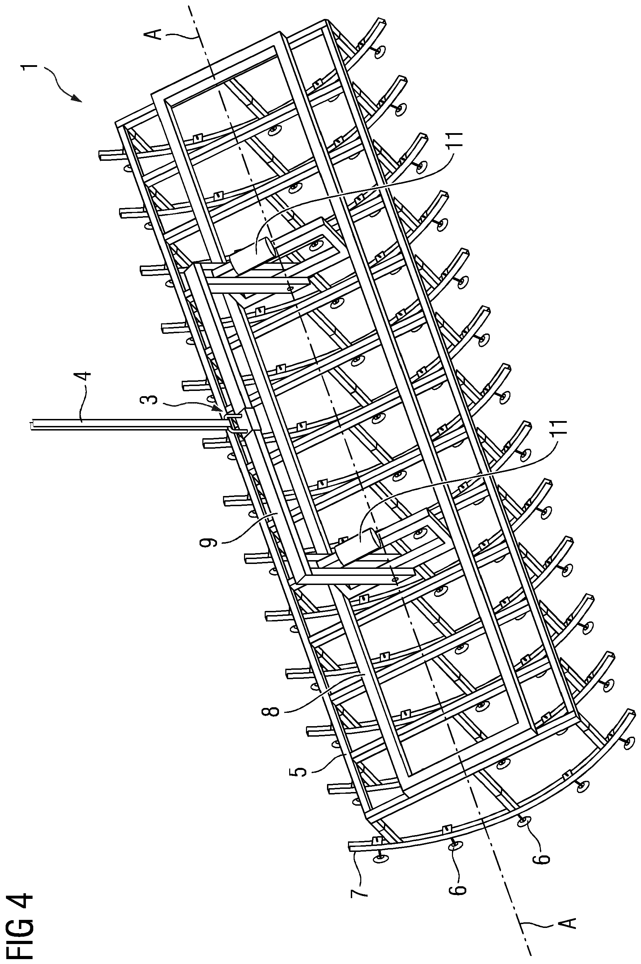

Fig. 4 shows the lifting yoke 1 of fig. 3, in a rotated or tilted position, in which the frame yoke 9, which is connected by the connection device 3 to the lifting means 4, is still vertical. As shown, the frame part 8 together with the supporting device 5 and the arrangement of the grippers 6 attached to the carrier rails 7 is significantly rotated around the axis A, so that the convex plane of the gripper arrangement is far out of the neutral, mainly horizontal position. This rotation is possible to both sides, as already mentioned. In general, the possible angle of rotation is at least +/-45°, preferably at least +/- 60°, and +/- 90° in the maximum. Certainly, each intermediate angle may be taken.

To each motor at least one balance weight 11 is assigned, which balance weight can preferably be adjusted by adding or removing weight units. It is also possible to have different weights in the individual positions in the event that there is an uneven weight distribution in the longitudinal directions.

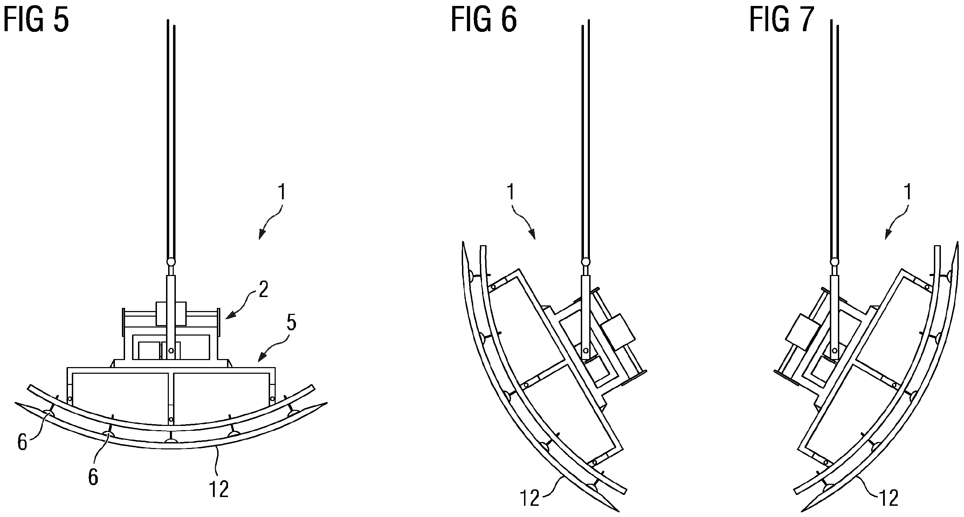

Figs. 5 to 7 show in respective side views of the lifting yoke 1 of figure 3 in 3 different positions, taken along the longitudinal direction of the rectangular geometry of the lifting yoke 1. Fig. 5 shows the lifting yoke 1 with the rotatable part of the supporting device 2 together with the suspension device 5 and the grippers 6 in the neutral position. A preform element 12 is attached to the grippers 6. In this embodiment, the gripper element arrangement has a convex geometry, so that the preform element 12 is gripped at the concave in or outside, as shown in fig. 5.

Fig. 6 shows the same arrangement of the lifting device 1 when rotated in the clockwise direction. The preform element 12 can now be positioned for example in a 45° position in the lower concave part of the blade mold. Fig. 7 shows the lifting yoke 1 with the preform element 12 being rotated in the counterclockwise direction also for example for 45° and can now be precisely positioned with this orientation in the blade mold.

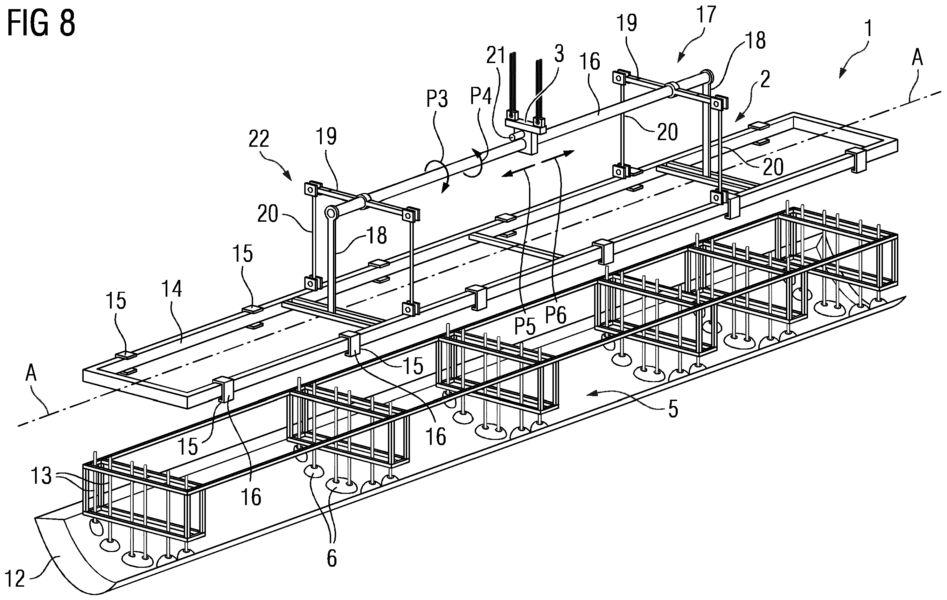

Fig. 8 shows another embodiment of an inventive lifting device 1, comprising a supporting device 2 with a connection device 3 and a suspension device 5 with the grippers 6 attached to it. In this embodiment the grippers 6 are attached to respective rods 13 instead of carrier rails. Just for illustration purpose a preform element 12 is attached to the grippers 6. This embodiment shows the possibility, that the supporting device 2 can be releasably connected to the suspension device 5, as already explained to fig. 1. To allow this, the supporting device 2 comprises 8 frame-like part 14, which comprises a number of connecting elements realized as clamps 15, which are movable between a releasing position, in which they do not clamp or connect the suspension device 5, and a clamping position, in which the suspension device 5 is firmly fixated to the part 14, which part 14 is the rotatable part 14 of the supporting device 2 and can be rotated by respective tilting means as described in the following. So, when the supporting device 2 shall be connected to the suspension device 5, which may either have a convex or concave gripper element arrangement, it is only necessary to lower the supporting device 2 onto the suspension device 5 while the clamps 15 are open and to close the clamps 15 then for clamping both items firmly together.

The embodiment of fig. 8 further comprises a shaft 16 which is connected to the connection device 3. This shaft 16 is rotatable arranged at an arm arrangement 17 comprising two arms 18. The shaft 16 is arranged in bearings of the arms 18, so that it can rotate, while the arms 18 are also arranged in respective bearing arrangements at the frame-like rotatable part 14 of the supporting device to. Further, the shaft 16 is comprised with a fixed arm 19 extending to both sides of the shaft 16. Both ends of both arms 19 are connected via further arms 20, which are variable in their length, to the rotatable part 14. The connection device 3 comprises a motor 21, which, preferably via a gearbox, drives the shaft 16 and rotates it, as shown by the arrows P3 and P4. This rotation results also in a rotation of the fixed arms 19, thereby extending respectively shortening the respective arm 20. The arms 20 are a tilting means 22 used for realizing the tilting or rotation. This results in a rotation around the axis A, which is realized by the bearings in which the arms 18 are arranged at the rotatable part 14 of the supporting device 2. Depending on the direction of rotation, the part 14 and with it the connected preform element 12 may be rotated in clockwise or counterclockwise direction.

As shown in this embodiment, it is also possible to move the whole lifting yoke 1 in the longitudinal direction through the connection device 3, as shown by the arrows P5 and P6. For this movement a respective motor can be provided. This movement may allow for a certain balancing the longitudinal direction in case of any uneven weight distribution.

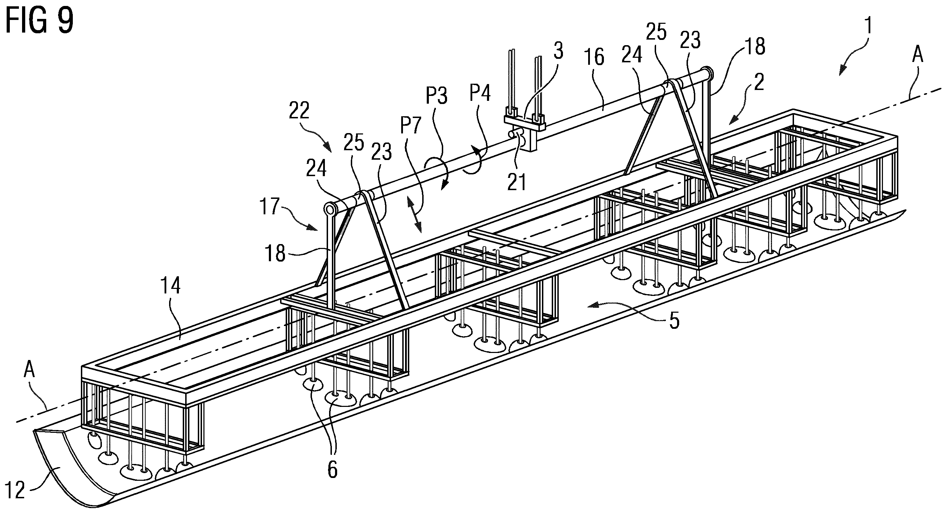

Fig. 9 shows and embodiment of a lifting yoke 1 comprising a supporting device 2 fixated to a suspension device 5 with the gripper elements 6, to which also in this illustration a preform element 12 is attached. The embodiment comprises a rotatable shaft 16 attached to the connection device 3, which comprises a motor 21 for rotating the shaft 16 as shown by the arrows P3 and P4. An arm arrangement 17 is also provided comprising two arms 18, arranged at the ends of the shaft 16, which is rotatably arranged at both arms 18. The arms 18, again, are rotatably arranged in respective bearing arrangements at the rotatable part 14 of the suspension device 2, which bearing arrangement realizes the horizontal axis of rotation A.

In this embodiment the tilting means 22 comprises two timing belts 23 each having a tooth section 24. Each timing belt is attached with both ends to the part 14 and runs over the shaft 16 and meshes with a tooth section 25 of the shaft 16. As shown by the arrow P7, the respective parts of the timing belts 23 at running to the right and left side are, depending on the direction of rotation of the shaft 16, either shortened or lengthened, resulting in the rotation of the rotatable part 14 together with the preform element 12 around the axis A.

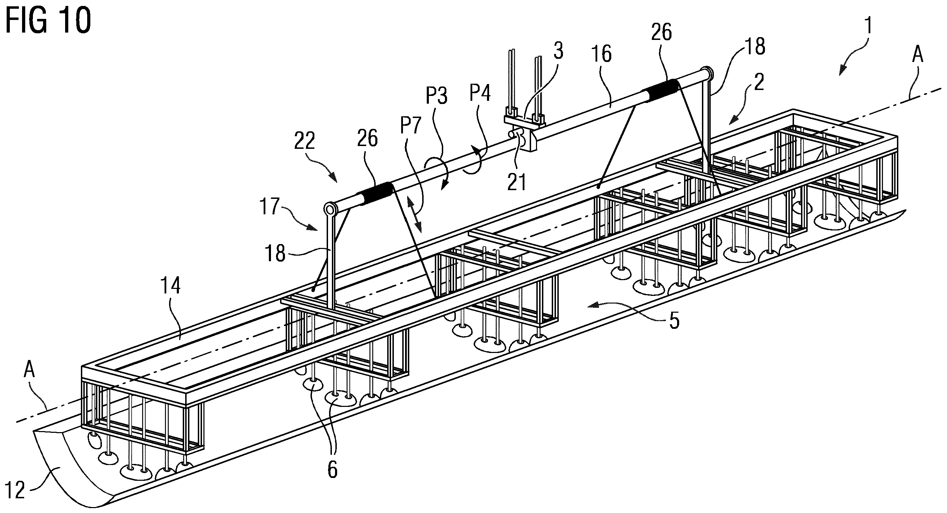

Fig. 10 shows an embodiment of a lifting device 1, comprising a supporting device 2 and a suspension device 5 with the grippers 6, to which for illustration purpose a preform element 12 is attached. To the connection device 3 comprising a motor 21 a shaft 16 is connected, which is rotatable via the motor 21 in clockwise and counterclockwise direction as shown by the arrows P3 and P4. The shaft 16 is arranged at the rotatable part 14 of the suspension device 2 by an arm arrangement 17 comprising two arms 18 arranged rotatably in bearings at both ends of the shaft 16. The lower ends of the arms 18 are rotatably arranged in respective bearing arrangements of the part 14, thereby again realizing the rotation axis A.

In this embodiment, the tilting means 22 comprises two traction cables 26, which are attached with both ends to the respective part 14 and are wound several times around the shaft 16. When rotating the shaft 16, the parts of the traction cables 26 extending to both sides of this shaft 16 are either lengthened or shortened, resulting in the respective rotational movement of the part 14 and with this the preform element 12. Depending on the direction of rotation either in the clockwise or the counterclockwise direction, the preform element 12 can be rotated in either clockwise or counterclockwise direction as explained to fig. 7 already.

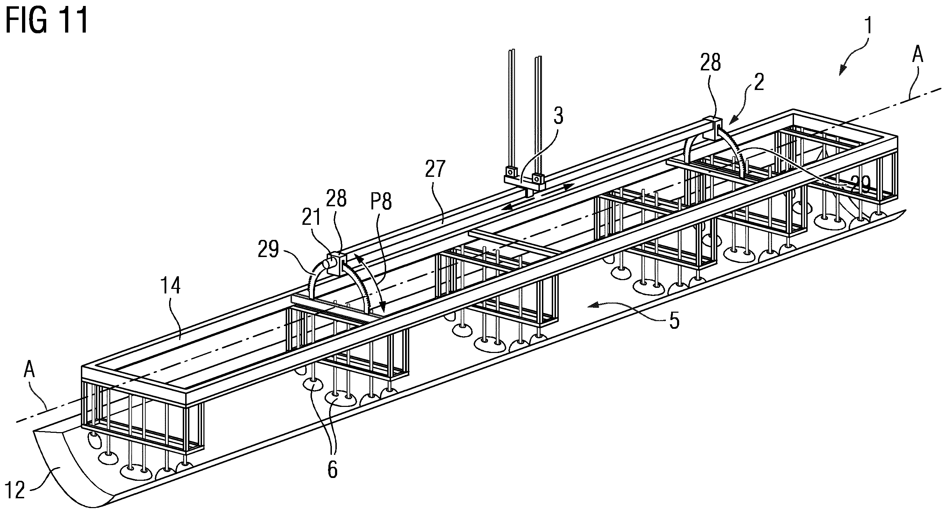

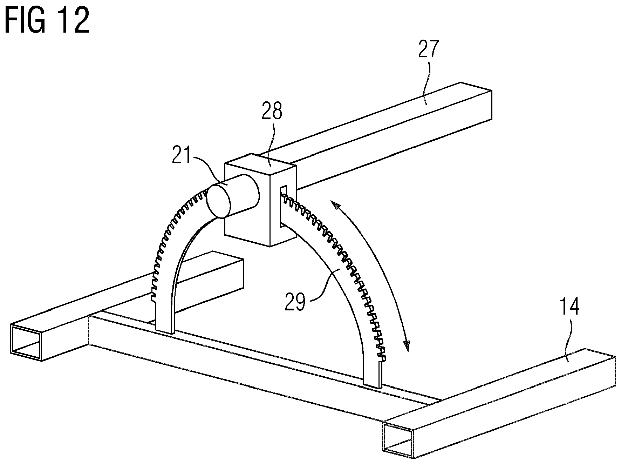

Finally, figs. 11 and 12 show an embodiment of the lifting yoke 1 comprising a supporting device to and the suspension device 5 with the grippers 6 attached to which a preform element 12 is shown.

In this embodiment the supporting device 2 comprises a beam 27 attached to the connection device 3. At both ends of the beam 27 a drive unit 28 comprising a motor 21 is attached. Further two arcuated rims 29 are provided, which are fixated to the frame-like part 14 of the suspension device 2 and which extend through the drive units 28. By the drive units 28 it is possible to move the rims 29 either in the clockwise or the counterclockwise direction through the drive units 28, as shown by the arrow P8, thereby changing the position of the rims 29 relative to the drive units 28. As the rims 29 are fixated to the rotatable part 14, which in turn is finally connected to the preform element 12, this rotatable arrangement is again rotated around the axis A of rotation. The axis A in this embodiment runs through the center of the arcuated rims 29, which extend around approx. 180°. The drive unit 28 preferably comprises a toothed wheel, meshing with the toothed circumference of the respective rim 29, as shown in fig. 12. In an alternative to this toothed construction, also a friction drive may be used.

Regarding all embodiments, the respective motor 21 is preferably connected to a gearbox, which gearbox comprises a respective toothed wheel or friction will or the like, finally meshing with the respective driven item, either the shaft 16 or the rim 29.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Lifting yoke, adapted for transporting convex or concave preform elements (12) comprising a layer stack of fiber mats fixated by means of a binding agent and adapted for the production of a wind turbine rotor blade, comprising a number of gripper elements (6) adapted to grip the preform element (12) and arranged in a convex or concave geometry at a suspension device (5) of the yoke (1), and a supporting device (2) connected to the suspension device (5) , which supporting device (2) comprises a connection device (3) adapted to connect the yoke (1) to a lifting means (4) and a rotation device adapted to rotate a part (14) of the supporting device (2) carrying the suspension device (5) relative to the connection device (3) around a horizontal axis (A).

2. Lifting yoke according to claim 1, **characterized in that** the suspension device (5) is releasably connected to the supporting device (2).

3. Lifting yoke according to claim 1 or 2, **characterized in that** the suspension device (5) comprises a, preferably rectangular, suspension frame (30), to which several carrier rails (7) are attached, at each of which several gripper elements (6) are arranged.

4. Lifting yoke according to claim 3, **characterized in that** the gripper elements (6) are movable along the carrier rails (7) and lockable in a desired position.

5. Lifting yoke according to one of the preceding claims, **characterized in that** the supporting device (2) comprises a, preferably rectangular, supporting frame (14).

6. Lifting yoke according to claim 2 and one of the claims 3 to 5, **characterized in that** the supporting device (2) comprises connecting elements for releasably connecting to the suspension device (5).

7. Lifting yoke according to claim 6, **characterized in that** the connecting elements are clamps (15) movable between a releasing position and a clamping position.

8. Lifting yoke according to one of the preceding claims, **characterized in that** the supporting device (2) comprises a shaft (16) coupled to the connection device (3), which shaft (16) is rotatable by means of a motor (21) arranged preferably at the connecting means (3) and is coupled to the rotatable part (14) of the supporting device (2) by tilting means (22).

9. Lifting yoke according to claim 8, **characterized in that** the shaft (16) is connected via an arm arrangement (17) to the part (14) of the supporting device (2) in a bearing arrangement providing the horizontal axis (A), which arm arrangement (17) comprises two arms (20) arranged at least partially laterally offset to the shaft (16) and connected to the part (14) of the supporting device (29) which arms (20) are variable in their length and provide the tilting means (22).

10. Lifting yoke according to claim 8, **characterized in that** the shaft (16) is connected via at arm arrangement (17) to the part of the supporting device (2) in a bearing arrangement providing the horizontal axis (A), wherein the shaft (16) is rotatably connected to the arm arrangement (17) and is coupled either via one or more timing belts (23), providing the tilting means (22), to the part (14) of the supporting device (2), which one or more timing belts (23) mesh with a toothed section (25) of the shaft (16) and are fixated with both ends at the part (14) of the supporting device (2), or is coupled via one or more traction cables (26), providing the tilting means (22), to the part (14) of the supporting device (2), which one or more traction cables (26) are wound around the shaft (16) and are fixated with both ends at the part (14) of the supporting device.

11. Lifting yoke according to one of the claims 1 to 7, **characterized in that** the supporting device (2) comprises a beam (27) coupled to the connecting device (3), which beam (27) comprises at least one motor (21) coupled to a rim (29) circulating around 90 - 180° and attached to the part (14) of the supporting device, which rim (29) is movable relative to the beam (27) when driven by the motor (21).

12. Lifting yoke according to one of the claims 1 to 7, **characterized in that** the supporting device (2) comprises a frame yoke (9), which is arranged at a, preferably rectangular, frame part (8) of the supporting device (2) by a pivot connection providing an axis (A) of rotation, wherein at least one motor (10) is provided for pivoting the frame yoke (9) relative to the frame part (8).

13. Lifting yoke according to one of the preceding claims, **characterized in that** at least one movable balance weight (11) is arranged at the supporting device (2).

14. Lifting yoke according to one of the preceding claims, **characterized in that** the supporting device (2) is movable along a longitudinal axis through the connecting device (3) .

15. Lifting yoke according to one of the preceding claims, characterized on that the gripper elements (6) are needle grippers, vacuum grippers, Bernoulli grippers or vortex grippers, wherein preferably at least a part of the gripper elements comprises a heating means.
